# EUROPÄISCHE PATENTSCHRIFT

(11) **EP 3 274 668 B1**
(45) Veröffentlichungstag und Bekanntmachung des Hinweises auf die Patenterteilung: **31.03.2021**
(21) Anmeldenummer: 16704246.4
(22) Anmeldetag: 15.02.2016
(51) Int. Cl.: G01F 23/296, G01N 9/00, G01N 11/16

(54) **ELEKTROMAGNETISCHE ANTRIEBS-/EMPFANGSEINHEIT FÜR EIN FELDGERÄT DER AUTOMATISIERUNGSTECHNIK**
ELECTROMAGNETIC DRIVE/RECEIVER UNIT FOR A FIELD DEVICE IN AUTOMATION
ENSEMBLE D'ENTRAÎNEMENT/RÉCEPTEUR ÉLECTROMAGNÉTIQUE POUR UN DISPOSITIF DE TERRAIN EN AUTOMATION

(30) Priorität: 25.03.2015 DE 102015104533
(43) Veröffentlichungstag der Anmeldung: 31.01.2018
(73) Patentinhaber: Endress+Hauser SE+Co. KG, 79689 Maulburg (DE)
(72) Erfinder: KUHNEN, Raphael, 79285 Ebringen (DE); FRÜHAUF, Dietmar, 79539 Lörrach (DE)
(74) Vertreter: Andres, Angelika Maria
(86) Internationale Anmeldenummer: PCT/EP2016/053130
(87) Internationale Veröffentlichungsnummer: WO 2016/150620

(56) Entgegenhaltungen:
- EP-A1- 0 949 489
- EP-A1- 2 209 110
- EP-A1- 2 801 799
- WO-A1-2007/113011
- WO-A1-2015/028179
- DE-A1- 3 601 704
- US-A- 3 625 058

## Beschreibung

Die Erfindung betrifft eine elektromechanische Wandlereinheit für ein Feldgerät der Automatisierungstechnik und eine Vorrichtung zur Bestimmung und/oder Überwachung zumindest einer Prozessgröße eines Mediums in einem Behältnis umfassend zumindest eine erfindungsgemäße elektromechanische Wandlereinheit. Die Prozessgröße ist beispielsweise gegeben durch den Füllstand des Mediums oder auch durch dessen Dichte oder Viskosität. Das Medium befindet sich beispielsweise in einem Behälter, einem Tank, oder auch in einer Rohrleitung.

In der Automatisierungstechnik werden unterschiedlichste Feldgeräte zur Bestimmung und/oder Überwachung zumindest einer Prozessgröße, insbesondere einer physikalischen oder chemischen Prozessgröße, eingesetzt. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte usw., welche die entsprechenden Prozessgrößen Füllstand, Durchfluss, Druck, Temperatur, pH-Wert bzw. Leitfähigkeit usw. erfassen. Die jeweiligen Messprinzipien sind aus einer Vielzahl von Veröffentlichungen bekannt.

Ein Feldgerät umfasst typischerweise zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von der Anmelderin hergestellt und vertrieben.

In einer Reihe von entsprechenden Feldgeräten kommen elektromechanische Wandlereinheiten zum Einsatz. Beispielsweise seien hier vibronische Sensoren, wie beispielsweise vibronische Füllstands- oder Durchflussmessgeräte genannt, aber auch in Ultraschall-Füllstandsmessgeräten oder -Durchflussmessgeräten werden sie verwendet. Auf jede Gattung von Feldgerät und dessen zugrundeliegendes Messprinzip, für welche eine erfindungsgemäße elektromechanische Wandlereinheit einsetzbar ist, gesondert und detailliert einzugehen, würde den Rahmen der vorliegenden Anmeldung sprengen. Deshalb beschränkt sich der Einfachheit halber die nachfolgende Beschreibung dort, wo auf konkrete Feldgeräte Bezug genommen wird, beispielhaft auf Füllstandsmessgeräte mit einer schwingfähigen Einheit.

Die schwingfähige Einheit eines solchen, auch als vibronischer Sensor bezeichneten Füllstandsmessgeräts, ist beispielsweise eine Schwinggabel, ein Einstab oder eine Membran. Die schwingfähige Einheit wird im Betrieb mittels einer Antriebs-/Empfangseinheit, üblicherweise in Form einer elektromechanischen Wandlereinheit, zu mechanischen Schwingungen angeregt, welche wiederum beispielsweise eine piezoelektrische, elektromagnetische oder auch magnetostriktive Antriebs-/Empfangseinheit sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Grunde bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Zur Anregung der mechanisch schwingfähigen Einheit sind unterschiedlichste, sowohl analoge als auch digitale Verfahren entwickelt worden. In vielen Fällen ist die Antriebs-/Empfangseinheit Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1sowie alle im Schwingkreis auftretenden Phasen ein Vielfaches von 360° ergeben, erfüllt sein. Dies hat zur Folge, dass eine bestimmte Phasenverschiebung zwischen dem Anregesignal und dem Empfangssignal gewährleistet werden muss. Hierfür sind unterschiedlichste Lösungen bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1 Ferner beschreibt die DE 36 01 704 A1 eine elektromechanische Wandlereinheit gemäß dem Oberbegriff des angefügten unabhängigen Patentanspruchs 1.

Sowohl das Anregesignal als auch das Empfangssignal sind charakterisiert durch ihre Frequenz, Amplitude und/oder Phase. Änderungen in diesen Größen werden dann üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, oder anhand einer Dämpfung der Schwingungsamplitude, unterschieden.

Die Dichte und/oder Viskosität wiederum lassen sich mit einem derartigen Messgerät nur ermitteln, wenn die schwingfähige Einheit vom Medium bedeckt ist. Aus der DE10050299A1, der DE102006033819A1 und der der DE102007043811A1 ist bekannt geworden, die Viskosität eines Mediums anhand der Frequenz-Phase-Kurve (Φ=g(f)) zu bestimmen. Dieses Vorgehen basiert auf der Abhängigkeit der Dämpfung der schwingfähigen Einheit von der Viskosität des jeweiligen Mediums. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Zur Bestimmung und/oder Überwachung der Dichte eines Mediums wird hingegen gemäß der DE10057974A1 der Einfluss von zumindest einer Störgröße, beispielswese der Viskosität, auf die Schwingungsfrequenz der mechanisch schwingfähigen Einheit ermittelt und kompensiert. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Bei dieser Phasenverschiebung lässt sich eine empirische Formel zur Bestimmung der Dichte aufstellen.

Die Antriebs-/Empfangseinheit ist, wie bereits erwähnt, in der Regel als eine elektromechanische Wandlereinheit ausgestaltet. Oftmals umfasst sie zumindest ein piezoelektrisches Element in unterschiedlichsten Ausgestaltungen. Unter Ausnutzung des piezoelektrischen Effekts lässt sich nämlich ein hoher Wirkungsgrad erzielen. Dabei sei unter dem Begriff Wirkungsgraf die Effizienz der Umwandlung der elektrischen in mechanische Energie verstanden. Entsprechende piezokeramische Werkstoffe auf PZT-Basis (Bleizirkonattitanat) sind normalerweise für den Einsatz bei Temperaturen bis 300°C geeignet. Zwar gibt es piezokeramische Werkstoffe, die auch bei Temperaturen oberhalb von 300°C ihre piezoelektrischen Eigenschaften bewahren; diese haben jedoch den Nachteil, dass sie deutlich ineffektiver sind als die Werkstoffe auf PZT-Basis. Für den Einsatz in vibronischen Sensoren sind diese Hochtemperaturwerkstoffe darüber hinaus aufgrund der großen Unterschiede in den thermischen Ausdehnungskoeffizienten von Metallen und keramischen Stoffen nur bedingt geeignet. Wegen ihrer Funktion als Kraftgeber muss das zumindest eine piezoelektrische Element kraftschlüssig mit einer Membran, welche Teil der schwingfähigen Einheit ist, verbunden sein. Insbesondere bei hohen Temperaturen kommt es aber vermehrt zu großen mechanischen Spannungen, die einen Bruch des piezoelektrischen Elements und damit einhergehend einen Totalausfall des Sensors zur Folge haben können.

Eine Alternative, welche für den Einsatz bei hohen Temperaturen besser geeignet sein kann, stellen sogenannte elektromagnetische Antriebs-/Empfangseinheiten dar, wie beispielsweise in den Druckschriften WO 2007/113011 und WO 2007/114950 A1 beschrieben. Die Umwandlung elektrischer Energie in mechanische Energie erfolgt hierbei über ein Magnetfeld. Eine entsprechende elektromechanische Wandlereinheit umfasst zumindest eine Spule und einen Permanentmagneten. Mittels der Spule wird ein den Magnet durchsetzendes magnetisches Wechselfeld erzeugt, und über den Magneten eine periodische Kraft auf die schwingfähige Einheit übertragen. Üblicherweise überfolgt die Übertragung dieser periodischen Kraft ähnlich dem Prinzip eines Stößels, welcher mittig auf die Membran aufsetzt.

Da bei einer elektromagnetischen Antriebs-/Empfangseinheit keine kraftschlüssige Verbindung mit der Membran der schwingfähigen Einheit notwendig ist, können diese im Vergleich zu piezoelektrischen Wandlereinheiten in einem erweiterten Temperaturbereich, insbesondere zwischen -200°C und 500°C verwendet werden. Allerdings ist infolge des Fehlens einer kraftschlüssigen Verbindung üblicherweise der Wirkungsgrad deutlich geringer als bei piezoelektrischen Antriebs-/Empfangseinheiten. Zwar kann eine elektromagnetische Antriebs-/Empfangseinheit im Bereich der Membran relativ hohe Kräfte entwickeln, jedoch ist die Auslenkung der Schwinggabel infolge der nicht-kraftschlüssigen-Verbindung zwischen Membran und Antrieb vergleichsweise gering. Folglich wird für eine elektromagnetische Antriebs-/Empfangseinheit im Vergleich zu einer piezoelektrischen Antriebs-/Empfangseinheit mehr Energie benötigt, was den Einsatz eines entsprechenden Sensors in explosionsgefährdeten Bereichen problematisch macht.

Der vorliegenden Erfindung liegt die Aufgabe zugrunde, eine elektromagnetische Antriebs-/Empfangseinheit, bzw. eine elektromechanische Wandlereinheit mit zumindest einer Spule und einem Magneten vorzuschlagen, welche sich durch einen erhöhten Wirkungsgrad auszeichnet.

Diese Aufgabe wird erfindungsgemäß gelöst durch eine elektromechanische Wandlereinheit gemäß dem angefügten unabhängigen Patentanspruch 1.

Die Umwandlung von elektrischer in mechanische Energie erfolgt über ein magnetisches Wechselfeld, mittels welchem die bei beiden Stangen in Schwingungen versetzt werden. Die Stangen verhalten sich also wie ein mechanischer Resonator. Die Schwingungsbewegung erfolgt dabei quer bzw. senkrecht zur Längsachse der beiden Stangen. Durch eine kraftschlüssige Verbindung mit der Membran werden die Schwingungsbewegungen auf die Membran übertragen, die ebenfalls eine Schwingungsbewegung ausführt.

Die erfindungsgemäße elektromechanische Wandlereinheit ist bestens für den Einsatz in einem erweiterten Temperaturbereich, insbesondere für den Einsatz bei hohen Temperaturen, geeignet. Da die beiden Stangen in einem Endbereich direkt mit der Membran verbunden sind und einen eigenen Resonator bilden, ist der Wirkungsgrad einer erfindungsgemäßen elektromechanischen Wandlereinheit gegenüber den in der Beschreibungseinleitung genannten Varianten aus dem Stand der Technik erhöht. Trotzdem ist der konstruktive Aufbau einer erfindungsgemäßen elektromechanischen Wandlereinheit vergleichsweise einfach.

In einer bevorzugten Ausgestaltung handelt es sich bei den Magneten um Alnico-Magnete. Alnico-Magneten werden mitunter auch als Stahlmagnete bezeichnet. Es handelt sich um Legierungen aus Eisen, Aliminium, Nickel, Kupfer und Cobalt, aus denen durch Gusstechniken oder mittels Sinterprozessen Permanentmagnete hergestellt werden. Unter anderem zeichnen sich derartige Magnete durch eine hohe Remanenzflussdichte (ca. 0.6-1.3T) sowie durch eine hohe Curie-Temperatur von 700-850°C aus, was Anwendungen in einem Temperaturbereich, von mind. bis zu 500°C erlaubt. Eine interessante Alternative stellen gegebenenfalls sogenannte Seltenerdmagnete dar, welche im Wesentlichen aus Eisenmetallen und Seltenerdmetallen bestehen. Beispielsweise ist Samarium-Cobalt derzeit bei Temperaturen bis zu 350° einsetzbar; in der Forschung werden jedoch Bestrebungen unternommen, Einsatztemperaturen von mehr als 500°C zu erreichen. Es versteht sich von selbst, dass aber auch andere Magnete für die vorliegende Erfindung verwendet werden können, welche ebenfalls unter die vorliegende Erfindung fallen.

Eine besonders bevorzugte Ausgestaltung sieht vor, dass der Kern der Spule Teil einer topfförmigen Ankereinheit ist, welche Ankereinheit einen Boden und eine Umfangswandung aufweist, wobei vom Boden ausgehend und zentrisch ins Innere der Ankereinheit zeigend ein Stutzen befestigt ist, wobei der Stutzen den Kern der Spule bildet, und wobei die Umfangswandung als magnetische Feldrückführung dient. Die Umfangswandung reicht dann beispielsweise bis zu den Stangen, welche die Ankereinheit nicht berühren sollen. Diese Ausgestaltung bietet zum einen bauliche Vorteile, da sowohl der Spulenkern als auch eine Feldrückführung einteilig in Form der Ankereinheit bereitgestellt werden können. Die Feldrückführung sorgt dabei aber ferner auch für eine magnetische Schirmung, was eine weitere Steigerung des Wirkungsgrades der jeweiligen entsprechend ausgestalteten erfindungsgemäßen elektromechanischen Wandlereinheit zur Folge hat.

Dabei ist es von Vorteil, wenn die Ankereinheit aus einem Material mit großer magnetischer Permeabilität, insbesondere Eisen, Kobalt, oder Kobalteisen, oder aus einem metallischen Glas besteht. In Bezug auf eine hohe magnetische Permeabilität eignen sich insbesondere ferromagnetische Materialien mit mindestens µ>100. Beispielsweise liegt die Permeabilität µ von Kobalteisen im Bereich µ_{Kobalteisen}≈10000-150000, die von Kobalt im Bereich µ_{Kobalt}≈100-200 und für Eisen gilt µ_{Eisen}≈300-10000. Insbesondere ist es vorteilhaft, wenn das Material für die Ankereinheit eine möglichst geringe Hysterese aufweist. Die Hysterese sollte zumindest so klein sein, dass das Material der stetigen Ummagnetisierung entsprechend der Frequenz des Anregesignals folgen kann. Ferromagnetischen Materialien sind für den Einsatz bei hohen Temperaturen besonders gut geeignet. Steht die Forderung nach Einsatzbarkeit für besonders hohe Temperaturen dagegen nicht im zentralen Fokus, werden wiederum metallische Gläser, deren magnetische Permeabilität typischerweise im Bereich µ_{Metglas}≈1500-4000 liegt, interessant, da diese eine besonders geringe Hysterese und damit einhergehend geringe Verluste bei der Ummagnetisierung, aufweisen. Ebenso ist es von Vorteil, wenn die beiden Magnete in die topfförmige Ankereinheit berührungslos hineinreichen, und sich im Falle, dass kein Magnetfeld vorhanden ist, im gleichen Abstand zur Spule auf gegenüberliegenden Seiten befinden. Auf diese Weise werden die beiden Magnete vollständig von der magnetischen Feldrückführung umhüllt.

Die erfindungsgemäße Aufgabe wird ferner gelöst durch eine Vorrichtung zur Bestimmung und/oder Überwachung zumindest einer Prozessgröße eines Mediums in einem Behältnis umfassend
- eine Sensoreinheit mit zumindest einer elektromechanischen Wandlereinheit nach zumindest einem der vorhergehenden Ansprüche, und
- eine Elektronikeinheit,
wobei die elektromechanische Wandlereinheit dazu ausgestaltet ist, die Sensoreinheit mittels eines elektrischen Anregesignals in Form eines elektrischen Wechselstromsignals, mit welchem die Spule beaufschlagt ist, zu mechanischen Schwingungen anzuregen, und die mechanischen Schwingungen der Sensoreinheit zu empfangen und in ein elektrisches Empfangssignal in Form eines elektrischen Wechselstromsignals umzuwandeln, und wobei die Elektronikeinheit dazu ausgestaltet ist, das Anregesignal ausgehend vom Empfangssignal zu erzeugen, und die zumindest eine Prozessgröße zumindest anhand des Empfangssignals zu bestimmen. Bei der Antriebs-/Empfangseinheit kann es sich dabei sowohl um eine separate Antriebseinheit und eine separate Empfangseinheit handeln, oder um eine kombinierte Antriebs-/Empfangseinheit.

Dabei resultieren aus den Schwingungen der beiden Stangen Schwingungen der schwingfähigen Einheit. Dabei ist es vorteilhaft, die Länge L der beiden Stangen derart gewählt ist, dass L=nλ/2+ λ/4, wobei λ die Wellenlänge der sich entlang der ausbreitenden Stangen ausbreitenden Wellen und n eine natürliche Zahl ist. Die Länge der Stangen wird also entsprechend einer gewünschten Anregefrequenz und im Hinblick auf die jeweils notwendige Temperaturentkopplung, welche aus der räumlichen Separation von Antriebs-/Empfangseinheit vom Prozess resultiert, angepasst.

In einer Ausgestaltung umfasst die Sensoreinheit eine schwingfähige Einheit. In diesem Fall handelt es sich bei der erfindungsgemäßen Vorrichtung um einen vibronischen Sensor.

Eine weitere Ausgestaltung sieht vor, dass die schwingfähige Einheit zumindest einen Teilbereich der Membran, oder zumindest einen Teilbereich der Membran sowie zumindest einen daran befestigten Schwingstab umfasst. Es handelt sich in diesem Fall bei der schwingfähigen Einheit also um eine Membran, einen Einstab oder eine Schwinggabel.

Die Membran kann einerseits einstückig gearbeitet sein. Im Falle, dass die entsprechend ausgestaltete Vorrichtung eine schwingfähige Einheit umfasst, ist die Membran dann einerseits der elektromagnetischen Wandlereinheit zugeordnet, bildet aber gleichzeitig die schwingfähige Einheit. Andererseits beinhaltet eine Ausgestaltung, dass die Membran zwei kraftschlüssig miteinander verbundene Teilbereiche aufweist, wobei ein erster Teilbereich der elektromagnetischen Wandlereinheit zugeordnet ist und wobei ein zweiter Teilbereich der schwingfähigen Einheit zugeordnet ist. Die Verbindung zwischen den beiden Teilbereichen kann dann beispielsweise mittels einer Löt-, Schweiß- oder Klebeverbindung hergestellt sein.

Es ist von Vorteil, wenn die schwingfähige Einheit in einer definierten Position innerhalb des Behältnisses angeordnet ist, derart, dass sie bis zu einer bestimmbaren Eintauchtiefe in das Medium eintaucht. Auf diese Weise lassen sich die Prozessgrößen Viskosität und/oder Dichte bestimmen.

Es ist ebenso von Vorteil, wenn die Prozessgröße gegeben ist durch einen Füllstand des Mediums in dem Behältnis, oder durch die Dichte oder die Viskosität des Mediums.

In einer besonders bevorzugten Ausgestaltung ist die schwingfähige Einheit eine Schwinggabel mit zwei Schwingstäben, wobei die beiden an der Membran befestigten Stangen der elektromechanischen Wandlereinheit und die beiden an der Membran befestigten Schwingstäbe einander spiegelsymmetrisch bezogen auf die Ebene senkrecht zur Längsachse durch die Stangen und/oder Schwingstäbe gegenüberliegend angeordnet sind. Jeweils ein Schwingstab und eine Stange verlaufen also im Wesentlichen entlang der gleichen gedachten Linie parallel zu ihrer beider Längsachsen. Insbesondere sind die beiden Stangen und Schwingstäbe derart angeordnet, dass sie sich im gleichen Abstand zum Mittelpunkt der Grundfläche der Membran senkrecht zur Längsachse der Stangen und Schwingstäbe befinden. Diese symmetrische Anordnung im Falle eines vibronischen Sensors mit einer Schwinggabel als schwingfähiger Einheit erzielt einen besonders hohen Wirkungsgrad.

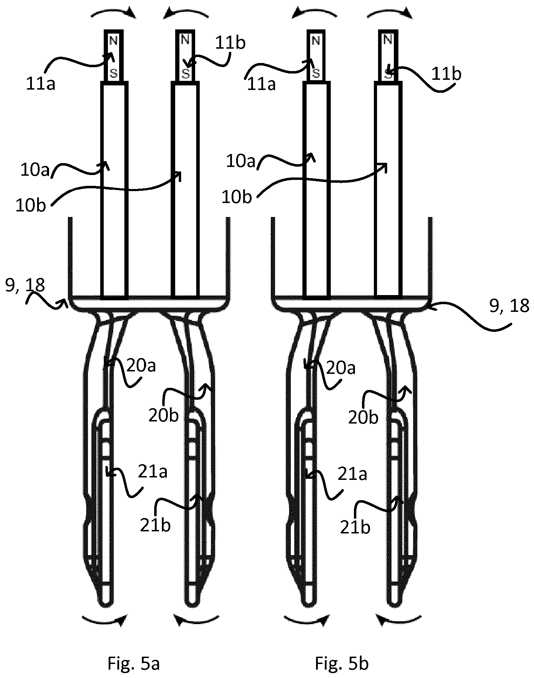

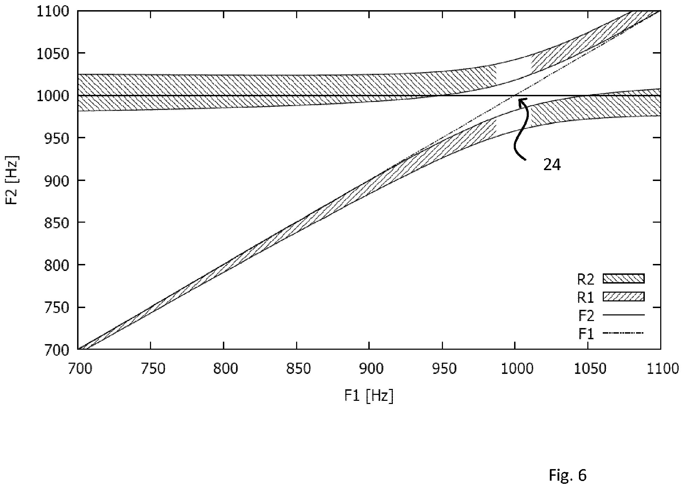

Dabei ist es von Vorteil, wenn die beiden Schwingstäbe und die Membran einen ersten mechanischen Resonator bilden, und wenn die beiden Stangen der elektromechanischen Wandlereinheit und die Membran einen zweiten mechanischen Resonator bilden. Dann sind der erste und der zweite Resonator mittels der Membran miteinander mechanisch gekoppelt, wobei die Frequenz des Anregesignals derart gewählt ist, dass der erste und zweite Resonator in einer antisymmetrischen Schwingungsmode bezogen auf die Ebene durch die Membran senkrecht zur Längsachse der Stangen und/oder Schwingstäbe schwingen. Die Schwingstäbe, Stangen und die Membran bilden also ein gekoppeltes Schwingsystem, wobei die Kopplung durch die Membran bestimmt wird. In solch einem gekoppelten Schwingsystem treten zwei Resonanzfrequenzen auf. Sofern diese Resonanzfrequenzen ausreichend dicht beieinander liegen, schwingen die Stangen und Schwingstäbe, also der erste und zweite mechanische Resonator gleichzeitig mit großer Schwingungsamplitude. Dies wird in Zusammenhang mit den Figuren Fig. 5 und Fig. 6 noch ausführlich beschrieben werden wird.

In einer Ausgestaltung sind die Länge L und/oder die Steifigkeit der beiden Stangen derart gewählt, dass die Schwingfrequenz des ersten Resonators und die Schwingfrequenz des zweiten Resonators im Falle, dass die schwingfähige Einheit nicht von Medium bedeckt ist, im Wesentlichen den gleichen Wert aufweisen. Die Resonanzfrequenz des ersten bzw. zweiten Resonators bestimmt sich aus der Länge sowie der geometrischen Ausgestaltung der Stangen bzw. Schwingstäbe, und durch die Art der Verbindung mit der Membran. Verwendet man beispielsweise eine Schwinggabel, wie sie in den von der Anmelderin vertriebenen LIQUIPHANTEN eingesetzt wird, so kann durch geeignete Wahl der Länge, des Durchmessers, der Wanddicke und der Ausgestaltung der Verbindung zur Membran die Resonanzfrequenz des zweiten mechanischen Resonators, welcher die Stangen beinhaltet, eingestellt werden.

In einer anderen Ausgestaltung sind die Länge L und/oder die Steifigkeit der beiden Stangen derart gewählt ist, dass die Schwingfrequenz des ersten Resonators und die Schwingfrequenz des zweiten Resonators im Falle, dass die schwingfähige Einheit von einem wählbaren Referenzmedium bedeckt ist, im Wesentlichen den gleichen Wert aufweisen. Damit lässt sich der Sensor auf ein bestimmtes gewünschtes Referenzmedium anpassen. Der Dämpfung der Schwingungsamplitude durch dieses Medium wird dadurch entgegengewirkt, vgl. auch die nachfolgende Beschreibung.

Die Länge der Stangen sowie die des Gehäuses können weiterhin in Bezug auf die jeweiligen Prozessanforderungen optimiert werden. Wird das Gehäuse aus einem Material gefertigt, welches sich durch eine gute Wärmeisolation auszeichnet, so hat es zusätzlich die Funktion eines Temperaturdistanzrohres. Das gleiche gilt für die Stangen. Außerdem kann die Länge der Stangen, und damit entsprechend auch die Länge des Gehäuses geeignet variiert werden. Ein größerer Abstand zur Membran, also eine räumliche Separation der Magnete und Spule von der Membran, bewirkt eine Temperaturentkopplung. Auf diese Weise kann der zulässige Temperaturbereich über denjenigen, welcher durch die Magnete definiert ist, nochmals erweitert werden. Hier ist jedoch zu beachten, dass mit zunehmender Länge der Stangen der Wirkungsgrad der Kraftübertragung leicht abnimmt. Somit muss stets zwischen dem gewünschten zulässigen Temperaturintervall und der gewünschten Effizienz abgewogen werden.

Die Erfindung sowie ihre vorteilhaften Ausgestaltungen werden nachfolgend anhand der Figuren Fig. 1 - Fig. 6 näher beschrieben. Es zeigt:
Fig. 1: eine schematische Skizze eines vibronischen Sensors gemäß Stand der Technik,
Fig. 2: eine erfindungsgemäße elektromechanische Wandlereinheit,
Fig. 3 eine schwingfähige Einheit in Form einer Schwinggabel,
Fig. 4: ein vibronisches Füllstandsmessgeät mit einer Schwinggabel als schwingfähiger Einheit und einer erfindungsgemäßen elektromechanischen Wandlereinheit,
Fig. 5 die symmetrische (a) und die antisymmetrische (b) Schwingungsmode des ersten und zweiten gekoppelten Resonators des gekoppelten Schwingsystems aus Fig. 4, und
Fig. 6 ein Diagramm der beiden Resonanzfrequenzen des ersten und zweiten Resonators aus Fig. 4 oder Fig. 5.

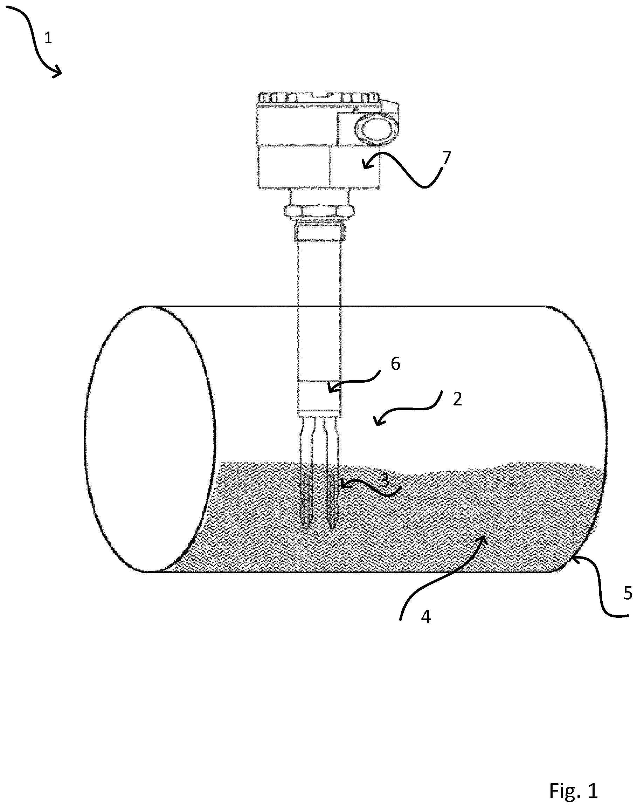

In Fig. 1 ist ein vibronisches Füllstandsmessgerät 1 gezeigt. Eine Sensoreinheit 2 mit einer mechanisch schwingfähigen Einheit 3 in Form einer Schwinggabel taucht teilweise in ein Medium 4 ein, welches sich in einem Behälter 5 befindet. Die schwingfähige Einheit 3 wird mittels der Anrege-/Empfangseinheit 6, in der Regel einer elektromechanischen Wandlereinheit, zu mechanischen Schwingungen angeregt, und kann beispielsweise ein piezoelektrischer Stapel- oder Bimorphantrieb, aber auch eine elektromagnetische oder auch magnetostriktive Antriebs-/Empfangseinheit sein. Es versteht sich jedoch von selbst, dass auch andere Ausgestaltungen eines vibronischen Füllstandsmessgeräts möglich sind. Weiterhin ist eine Elektronikeinheit 7 dargestellt, mittels welcher die Signalerfassung, -auswertung und/oder -speisung erfolgt.

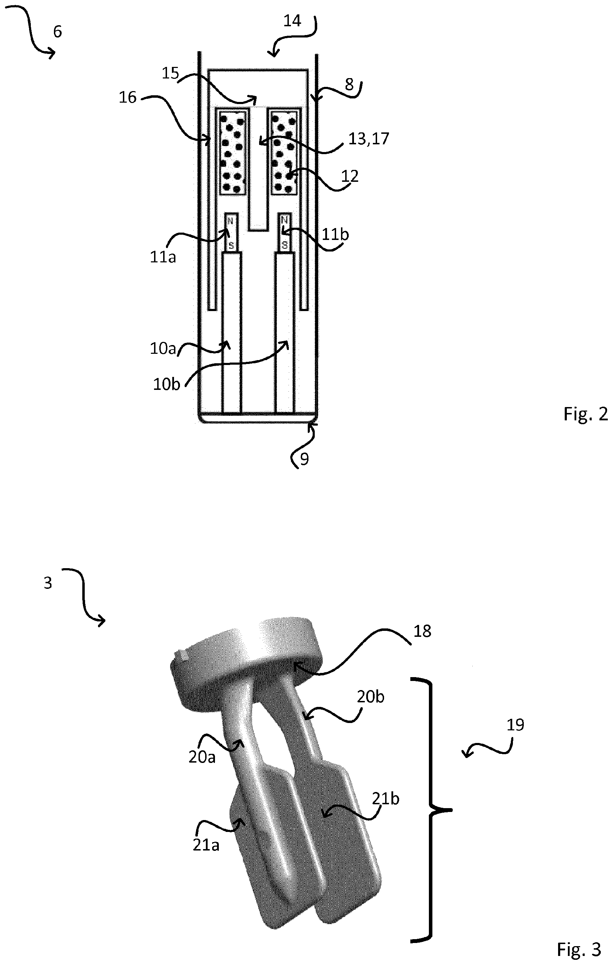

In Fig. 2 ist schematisch eine Ausgestaltung einer erfindungsgemäßen elektromechanischen Wandlereinheit gezeigt. In der unteren Wandung eines Gehäuses 8 ist eine Membran 9 eingebracht. An dieser Seitenfläche schließt das Gehäuse 8 also mit der Membran 9 ab. In diesem Beispiel sei das Gehäuse 8 zylinderförmig und die Membran 9 scheibenförmig mit kreisrunder Grundfläche A. Es versteht sich jedoch von selbst, dass auch andere Geometrien denkbar sind und unter die vorliegende Erfindung fallen. Senkrecht zur Grundfläche A der Membran 9 und ins Innere des Gehäuses 8 hineinreichend sind zwei Stangen 10a, 10b an der Membran 9 befestigt. Dabei handelt es sich um eine kraftschlüssige Verbindung. Die Grundfläche der Membran liegt dann in einer Ebene senkrecht zur Längsrichtung der beiden Stangen. Beispielsweise sind die beiden Stangen 10a, 10b entlang einer gedachten Linie durch den Mittelpunkt der Grundfläche A der Membran 9 symmetrisch um den Mittelpunkt herum angeordnet.

In dem der Membran 9 abgewandten Endbereich der Stangen 10a, 10b ist jeweils ein Magnet 11a, 11b befestigt. Bevorzugt handelt es sich hierbei um Alnico-Magnete, insbesondere um längliche Alnico-Magnete.

Oberhalb der beiden Magnete 11a, 11b ist eine Spule 12 mit Kern 13 angeordnet. Die beiden Stangen 10, 10a mit den beiden Magneten 11a, 11b berühren dabei die Spule 12 und den Kern 13 nicht. Die Spule 12 wird im fortlaufenden Betrieb zur Erzeugung eines magnetischen Wechselfeldes mit einem Wechselstromsignal beaufschlagt. Aufgrund dieses Wechselfeldes werden die beiden Stangen 10a, 10b über die beiden Magnete 11a, 11b horizontal, d. h. senkrecht oder quer zu ihrer Längsachse, ausgelenkt derart, dass sie in Schwingungen versetzt werden. Einerseits haben die Stangen 10a, 10b dann eine Hebelwirkung, durch die die durch die horizontale Auslenkung erzeugte Biegung der Stangen 10a, 10b auf die Membran 9 übertragen wird derart, dass die Membran 9 in Schwingungen versetzt wird. Andererseits handelt es sich bei der Kombination aus den beiden Stangen 10a, 10b und der Membran 9 aber um einen eigenen Resonator. Die Anregung der Membran 9 zu mechanischen Schwingungen erfolgt also mittels eines magnetischen Wechselfeldes.

Der Kern 13 der Spule 12 ist ohne Beschränkung der Allgemeinheit in diesem Ausführungsbeispiel Teil einer topfförmigen Ankereinheit 14 mit einem Boden 15 sowie einer Umfangswandung 16.

Beispielsweise kann der Boden 15 ebenso wie die Grundfläche A der Membran 9 eine kreisförmige Querschnittsfläche aufweisen. Vom Boden 15 der topfförmigen Ankereinheit 14 reicht der Kern 13 der Spule 12 in Form eines Stutzens 17 zentrisch ins Innere der Ankereinheit 14. Der Umfangswandung 16 hat in diesem Falle dann die Funktion einer magnetischen Feldrückführung inne. Die Ankereinheit 14 ist bevorzugt aus einem material großer magnetischer Permeabilität gefertigt, insbesondere aus Eisen, Kobalt, oder einem metallischem Glas.

In Fig. 3 ist beispielhaft eine schematische Skizze einer schwingfähigen Einheit 3 in Form einer Schwinggabel, wie Sie für den LIQUIPHANT eingesetzt wird, gezeigt. Zu sehen ist eine Membran 18, und das damit verbundene Schwingelement 19. Das Schwingelement 19 weist zwei Schwingstäbe 20a, 20b auf, an welchen endseitig jeweils ein Paddel 21a, 21b angeformt ist. Im Betrieb führt die Schwinggabel 3 Schwingungsbewegungen entsprechend der Schwingungsmode, mit welcher sie angeregt wird, aus. Jeder der beiden Schwingstäbe 20a, 20b verhält sich im Wesentlichen wie ein sogenannter Biegeschwinger. In der Grundschwingungsmode schwingen die beiden Schwingstäbe 20a, 20b beispielsweise gegenphasig zueinander.

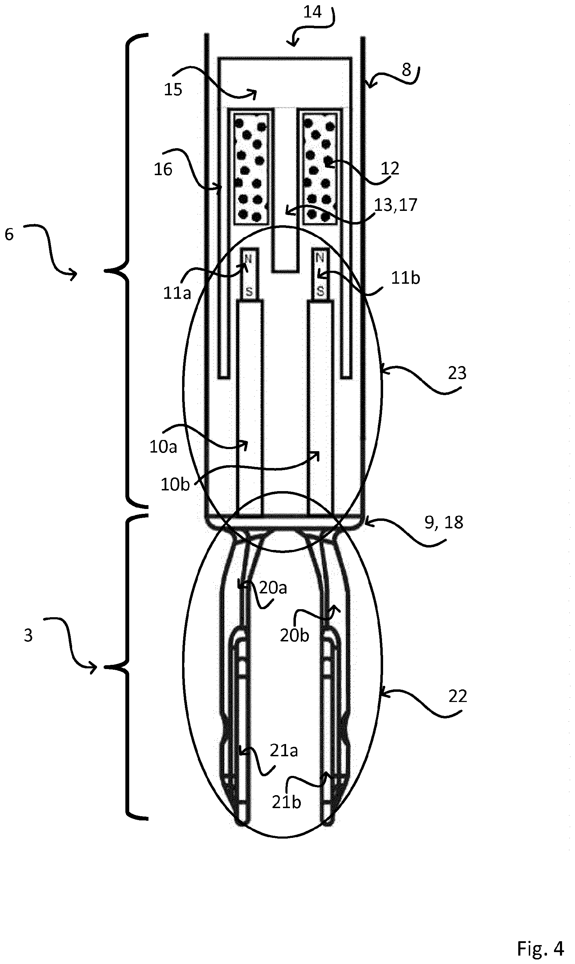

In Fig. 4 ist schließlich schematisch ein vibronisches Füllstandsmessgerät mit einer schwingfähigen Einheit 3 wie in Fig. 3 und einer elektromechanischen Wandlereinheit wie in Fig. 2 abgebildet. Auf gleiche Bezugszeichen wird deshalb im Folgenden nicht nochmals eingegangen. Die Membran 9 der elektromagnetischen Wandlereinheit ist in diesem Beispiel zugleich die Membran 18 der Schwinggabel 3. Es handelt sich also um eine einstückgie Membran 9,18, welche sowohl der schwingfähigen Einheit 3 als auch der elektromechanischen Wandlereinheit 6 zugeordnet ist. Es versteht sich jedoch von selbst, dass die Membran 9,18 in einer anderen Ausgestaltung auch aus zwei kraftschlüssig miteinander verbundenen Teilbereichen 9 und 18 gefertigt sein kann, wobei der erste Teilbereich 9 der elektromechanischen Wandlereinheit 6 zugeordnet ist, und der zweite Teilbereich 18 der schwingfähigen Einheit 3.

Bevorzugt sind die beiden Schwingstäbe 20a, 20b und die beiden Stangen 10a, 10b derart an der Membran befestigt, dass jeweils eine Stange 10a, 10b und ein Schwingstab 20a,20b entlang der gleichen Längsachse, das ist die Achse senkrecht zur Grundfläche A durch die Membran 9,18, verlaufen. Dabei schneiden die beiden Längsachsen die Ebene parallel zur Membran 9, 18 im gleichen Abstand zum Mittelpunkt dieser Fläche A. Durch diese symmetrische Anordnung kann ein erhöhter Wirkungsgrad erzielt werden.

Die beiden Schwingstäbe 20a, 20b der schwingfähigen Einheit 3 bilden mit der Membran 9,18 einen ersten mechanischen Resonator 22 und die beiden Stangen 10a, 10b bilden mit der Membran 9,18 einen zweiten mechanischen Resonator 23. Die beiden Resonatoren 22, 23 sind über die Membran 9,18 mechanisch miteinander gekoppelt, wobei die Kopplung über die Membran 9,18 einstellbar ist. Beispielsweise kann die Kopplung über die Dicke, oder das Material der Membran beeinflusst werden, aber auch durch die jeweilige Verbindung mit den Schwingstäben 20a, 20b oder Stangen 10a, 10b. In einem derartig gekoppelten Resonatorsystem treten zwei Schwingungsmoden mit zwei unterschiedlichen Resonanzfrequenzen (F1, F2) auf, welche in Fig. 5 und Fig. 6 illustriert sind.

Bei den beiden Schwingungsmoden handelt es sich um eine symmetrische - und eine antisymmetrische Schwingungsmode, wie in Fig. 5 illustriert. Bei der symmetrischen Schwingungsmode (Fig. 5a) schwingen der erste Resonator 22 und der zweite Resonator 23 spiegelsymmetrisch zueinander, bezogen auf die Ebene parallel zur Grundfläche A der Membran 9,18. Bewegen sich die Stangen 10a, 10b im der Membran 9,18 abgewandten Endbereich aufeinander zu, so bewegen sich auch die beiden Schwingstäbe 20a, 20b im Bereich der Paddel 21a, 21b aufeinander zu. Bei der antisymmetrischen Schwingungsmode (Fig. 5b) dagegen bewegen sich die Stangen 10a, 10b im der Membran 9,18 abgewandten Endbereich aufeinander zu, wenn sich die beiden Schwingstäbe 20a, 20b im Bereich der Paddel 21a, 21b voneinander wegbewegen. Die antisymmetrische Schwingungsmode entspricht dabei der natürlichen Schwingungsbewegung der Schwinggabel 3, beispielsweise einer Schwinggabel 3, welche in einem LIQUIPHANTEN eingesetzt ist. Dagegen bleibt bei der symmetrischen Schwingungsmode die Membran 9, 18 weitegehend unbewegt.

Liegen die Resonanzfrequenzen F1, F2 der beiden Schwingungsmoden ausreichend dicht beieinander, schwingen die Schwingstäbe 20a, 20b und die beiden Stangen 10a, 10b im Falle, dass die schwingfähige Einheit 3 nicht in Kontakt mit Medium 4 ist, gleichzeitig mit maximaler Amplitude bezogen auf eine bestimmte Anregeleistung Selbst wenn der erste 22 und der zweite Resonator 23 derart ausgestaltet werden, dass beide als einzelnes System die gleiche Resonanzfrequenz (F1=F2) aufweisen, werden sich durch die Kopplung der beiden Resonatoren 22, 23 mittels der Membran 9, 18 zwei Resonanzfrequenzen (F1≠F2) bzw. Schwingungsmoden ausbilden, wobei der Abstand zwischen den beiden Resonanzfrequenzen F1, F2 durch die Kopplung bestimmt ist.

Fig. 6 zeigt ein Diagramm, in welchem die Frequenzen der beiden Resonatoren 22, 23 gegeneinander aufgetragen sind. Es bezeichnet F1 die Frequenz des ersten Resonators 22 und F2 die Frequenz des zweiten Resonators 23. Während sich die Frequenz F1 beim Eintauchen der schwingfähigen Einheit 3 in ein Medium 4 ändert, bleibt die Frequenz F2 des zweiten Resonators im Wesentlichen konstant. Aufgrund der Kopplung durch die Membran 9,18 ergeben sich jedoch die beiden Schraffuren R1 des ersten 22 und R2 des zweiten Resonators 23, wobei die Breite der Schraffuren die Schwingungsamplitude des jeweiligen Resonators 22, 23 angibt. Schwingt nun beispielsweise der erste Resonator 22, also die schwingfähige Einheit 6, mit einer Frequenz von F1=700Hz, so erfolgt die Schwingungsbewegung mit einer vergleichsweise geringen Schwingungsamplitude. Dabei sei angenommen, dass die Schwingung bei F1=700Hz einer Schwingung der schwingfähigen Einheit 3 bei teilweisem Eintauchen in ein bestimmtes Medium 4 entspricht. Schwingt der zweite Resonator 23 gleichzeitig bei F2=1000Hz, so weist diese Schwingung eine vergleichsweise große Schwingungsamplitude auf. Wird nun die schwingfähige Einheit 3 langsam aus dem Medium 4 herausgezogen, steigt sowohl die Frequenz F1 des ersten Resonators 22 als auch dessen Schwingungsamplitude R1 an. Der Einfachheit halber sei für diese Betrachtung die sich durch das Herausziehen der schwingfähigen Einheit 3 aus dem Medium 4 verringernde Mediumsdämpfung vernachlässigt. Als Konsequenz verbessert sich die Abstimmung der beiden Resonatoren 22, 23 und es kann mehr Energie von den Stangen 10a, 10b auf die Schwingstäbe 20a, 20b übertragen wird. Im gleichen Maße sinkt jedoch die Schwingungsamplitude R2 des zweiten Resonators 23.

Im Kreuzungspunkt 24 sind der erste 22 und der zweite Resonator 23 aufeinander abgestimmt. Trotzdem treten aufgrund der Kopplung durch die Membran 9, 18 zwei unterschiedliche Resonanzfrequenzen F1 und F2 auf. Da in diesem Bereich keine Zuordnung der Resonanzen zu den Schwingstäben 20a, 20b bzw. Stangen 10a, 10b möglich ist, ist dieser Bereich nicht mit einer Schraffur versehen. Steigt die Frequenz F2 des ersten Resonators 22 weiter an, so ergibt sich ein zum Krezungspunkt 24 spiegelsymmetrisches Verhalten für die beiden Schwingungsmoden des ersten 22 und zweiten 23 Resonators.

Bevorzugt sollte die Länge der beiden Stangen 10a, 10b derart gewählt sein, dass die Hebelwirkung auf die Membran 9,18 möglichst groß ist. Gleichzeitig sollte jedoch darauf geachtet werden, dass kein zu großer Abstand zwischen den Resonanzfrequenzen (F1, F2) des ersten 22 und zweiten 23 Resonators entsteht, um eine möglichst effiziente Energieübertragung von der elektromechanischen Wandlereinheit 4 auf die Schwingstäbe 20a, 20b mit den Paddeln 21a, 21b, also einen möglichst großen Wirkungsgrad, zu erzielen. Auf der anderen Seite sollte die Resonanzfrequenz F2 des zweiten Resonators 23 jedoch auch nicht im Dynamikbereich für die Resonanzfrequenz F1 der schwingfähigen Einheit 3 liegen, damit keine doppelte Zuordnung einer Frequenz erfolgen kann. Mit dem Dynamikbereich ist dabei jenes Intervall von Resonanzfrequenzen F1 gemeint, mit welchen die schwingfähige Einheit 3 bei Kontakt mit unterschiedlichen Medien 4 und im Falle unterschiedlicher Eintauchtiefen in das jeweilige Medium 4 schwingen kann. Daraus folgt, dass die Resonanzfrequenz F2 des zweiten Resonators 23 so zu wählen ist, dass sie knapp oberhalb der höchsten Frequenz F1 des Dynamikbereichs einer bestimmten Schwingungsmode der schwingfähigen Einheit 3 liegt. Gleichzeitig gilt es, die Steifigkeit und Masse der Stangen 10a, 10b so zu optimieren, dass eine möglichst große Hebelwirkung vorhanden ist. Wird beispielsweise eine LIQUIPHANT-Schwinggabel verwendet, so beträgt ohne Kontakt mit dem zu messenden Medium F1≈1000Hz. Dann wird der zweite Resonator 23 beispielsweise auf eine Frequenz von F2≈1100Hz abgestimmt, so dass durch die Kopplung die Frequenz F2 des zweiten Resonators 23 auf ca. 950Hz sinkt. Beim Eintauchen in ein zu messendes Medium sinkt die Frequenz F1 des ersten Resonators 22, während die Frequenz F2 des zweiten Resonators 23 im Wesentlichen konstant bleibt.

Beispielsweise kann die Anpassung der Resonanzfrequenzen F1 und F2 derart vorgenommen werden, dass diese ohne Kontakt der schwingfähigen Einheit 3 mit einem Medium 4 aufeinander abgestimmt sind. In diesem Falle verschieben sich die Frequenzen F1 und F2 beim zumindest teilweisen Eintauchen der schwingfähigen Einheit in ein Medium 4 vom Kreuzungspunkt 24 weg. Andererseits kann die Anpassung der Resonanzfrequenzen F1 und F2 auch derart vorgenommen werden, dass sie im Falle einer bestimmten Eintauchtiefe der schwingfähigen Einheit 3 in ein wählbares Referenzmedium 4 aufeinander abgestimmt sind. In diesem Falle wird durch die Art der Anpassung der beiden Resonatoren 22, 23 aufeinander der Dämpfung durch das Referenzmedium entgegengewirkt.

### Bezugszeichenliste

- 1: Vibronischer Sensor
- 2: Sensoreinheit
- 3: Schwingfähige Einheit
- 4: Medium
- 5: Behältnis
- 6: Antriebs-/Empfangseinheit
- 7: Elektronikeinheit
- 8: Gehäuse der Antriebs-/Empfangseinheit
- 9: Membran der Antriebs-/Empfangseinheit
- 10a, 10b: Stangen
- 11a, 11b: Magnete
- 12: Spule
- 13: Kern
- 14: Ankereinheit
- 15: Boden
- 16: Umfangswandung, magnetische Rückführung
- 17: Stutzen der Ankereinheit, gleichzeitig ggf. Kern der Spule
- 18: Membran der schwingfähigen Einheit
- 19: Schwingelement
- 20a, 20b: Schwingstäbe
- 21a, 21b: Paddel
- 22: erster Resonator
- 23: zweiter Resonator
- 24: Kreuzungspunkt

- F1: Frequenz des ersten Resonators
- F2: Frequenz des zweiten Resonators
- R1: Schwingungsamplitude des ersten Resonators
- R2: Schwingungsamplitude des zweiten Resonators
- L: Länge der Stangen
- λ: Wellenlänge der sich entlang der Stangen ausbreitenden Wellen

## Patentansprüche

1. Elektromechanische Wandlereinheit (6) für ein Feldgerät (1) der Automatisierungstechnik umfassend
- eine in mechanische Schwingungen versetzbare Membran (9),
- zwei senkrecht zu einer Grundfläche der Membran (9) kraftschlüssig an der Membran (9) befestigte Stangen (10a, 10b),
- ein Gehäuse (8), wobei die Membran (9) zumindest einen Teilbereich einer Wandung des Gehäuses (8) bildet, und wobei die beiden Stangen (10a, 10b) ins Gehäuseinnere hineinreichen wobei die beiden Stangen (10a, 10b) derart an der Membran (9) befestigt sind, dass aus den Schwingungen der beiden Stangen (10a, 10b) Schwingungen der Membran (9) resultieren,
**dadurch gekennzeichnet, dass** die Wandlereinheit ferner umfasst:
- zwei Magnete (11a, 11b), wobei jeweils ein Magnet (11a, 11b) in dem der Membran (9) abgewandten Endbereich jeweils einer der beiden Stangen (10a, 10b) befestigt ist, und
- eine Spule (12) mit Kern (13), welche innerhalb des Gehäuses (8) oberhalb der Magnete (11a, 11b) befestigt ist, und welche Spule (12) mit einem elektrischen Wechselstromsignal beaufschlagbar ist,
wobei die Spule (12) dazu ausgestaltet ist, ein Magnetfeld zu erzeugen, welches Magnetfeld die beiden Stangen (10a, 10b) mittels der beiden Magnete (11a, 11b) in mechanische Schwingungen senkrecht zur Längsachse der beiden Stangen (10a, 10b) versetzt.

2. Elektromechanische Wandlereinheit nach Anspruch 1,
wobei es sich bei den Magneten (11a, 11b) um Alnico-Magnete handelt.

3. Elektromechanische Wandlereinheit nach Anspruch 1 oder 2,
wobei der Kern (13) der Spule (12) Teil einer topfförmigen Ankereinheit (14) ist, welche Ankereinheit (14) einen Boden (15) und eine Umfangswandung (16) aufweist, wobei vom Boden (15) ausgehend und zentrisch ins Innere der Ankereinheit (14) zeigend ein Stutzen (17) befestigt ist, wobei der Stutzen (17) den Kern (13) der Spule (12) bildet, und wobei die Umfangswandung (16) als magnetische Feldrückführung dient.

4. Elektromechanische Wandlereinheit nach Anspruch 3,
wobei die Ankereinheit (14) aus einem Material mit großer magnetischer Permeabilität, insbesondere Eisen, Kobalt oder Cobalteisen, oder aus einem metallischen Glas besteht.

5. Elektromechanische Wandlereinheit nach Anspruch 3 oder 4,
wobei die beiden Magnete (11a, 11b) in die topfförmige Ankereinheit (14) berührungslos hineinreichen, und sich im Falle, dass kein Magnetfeld vorhanden ist, im gleichen Abstand zur Spule (12) auf gegenüberliegenden Seiten befinden.

6. Vorrichtung (1) zur Bestimmung und/oder Überwachung zumindest einer Prozessgröße eines Mediums (4) in einem Behältnis (5) umfassend
- eine Sensoreinheit (2) mit zumindest einer elektromechanischen Wandlereinheit (6) nach zumindest einem der vorhergehenden Ansprüche, und
- eine Elektronikeinheit (7),
wobei die elektromechanische Wandlereinheit (6) dazu ausgestaltet ist, die Sensoreinheit (2) mittels eines elektrischen Anregesignals in Form eines elektrischen Wechselstromsignals, mit welchem die Spule (12) beaufschlagt ist, zu mechanischen Schwingungen anzuregen, und die mechanischen Schwingungen der Sensoreinheit (2) zu empfangen und in ein elektrisches Empfangssignal in Form eines elektrischen Wechselstromsignals umzuwandeln, und
wobei die Elektronikeinheit (7) dazu ausgestaltet ist, das Anregesignal ausgehend vom Empfangssignal zu erzeugen, und die zumindest eine Prozessgröße zumindest anhand des Empfangssignals zu bestimmen.

7. Vorrichtung nach Anspruch 6,
wobei die Sensoreinheit (2) eine schwingfähige Einheit (3) umfasst.

8. Vorrichtung nach zumindest einem der Ansprüche 6-8,
wobei die schwingfähige Einheit (3) zumindest einen Teilbereich der Membran (9,18), oder zumindest einen Teilbereich der Membran (9,18) sowie zumindest einen daran befestigten Schwingstab (20a, 20b) umfasst.

9. Vorrichtung nach Anspruch 6,
wobei die Membran (9,18) zwei kraftschlüssig miteinander verbundene Teilbereiche aufweist, wobei ein erster Teilbereich (9) der elektromagnetischen Wandlereinheit (6) zugeordnet ist und wobei ein zweiter Teilbereich (18) der schwingfähigen Einheit (3) zugeordnet ist.

10. Vorrichtung nach zumindest einem der Ansprüche 6-10,
wobei die schwingfähige Einheit (3) in einer definierten Position innerhalb des Behältnisses (5) angeordnet ist, derart, dass sie bis zu einer bestimmbaren Eintauchtiefe in das Medium (4) eintaucht.

11. Vorrichtung nach Anspruch 6 oder 7,
wobei die Prozessgröße gegeben ist durch einen Füllstand, durch die Dichte oder die Viskosität des Mediums (4).

12. Vorrichtung nach zumindest einem der Ansprüche 6-11,
wobei die schwingfähige Einheit (3) eine Schwinggabel mit zwei Schwingstäben (20a, 20b) ist, und wobei die beiden an der Membran (9,18) befestigten Stangen (10a, 10b) der elektromechanischen Wandlereinheit (6) und die beiden an der Membran (9,18) befestigten Schwingstäbe (20a, 20b) einander spiegelsymmetrisch bezogen auf die Ebene senkrecht zur Längsachse durch die Stangen (10a, 10b) und/oder Schwingstäbe(20a, 20b) gegenüberliegend angeordnet sind.

13. Vorrichtung nach Anspruch 12,
wobei die beiden Schwingstäbe (20a, 20b) und die Membran (9,18) einen ersten mechanischen Resonator (22) bilden,
wobei die beiden Stangen (10a, 10b) der elektromechanischen Wandlereinheit (6) und die Membran (9,18) einen zweiten mechanischen Resonator (23) bilden,
wobei der erste (22) und der zweite (23) Resonator mittels der Membran (9,18) miteinander mechanisch gekoppelt sind, und
wobei die Frequenz des Anregesignals derart gewählt ist, dass der erste (22) und zweite (23) Resonator in einer antisymmetrischen Schwingungsmode bezogen auf die Ebene durch die Membran (9,18) senkrecht zur Längsachse der Stangen (10a, 10b) und/oder Schwingstäbe (20a, 20b) schwingen.

14. Vorrichtung nach zumindest einem der Ansprüche 12 oder 13,
wobei die Länge (L) und/oder die Steifigkeit der beiden Stangen (10a, 10b) derart gewählt ist, dass die Schwingfrequenz (F1) des ersten Resonators (22) und die Schwingfrequenz (F2) des zweiten Resonators (23) im Falle, dass die schwingfähige Einheit (3) nicht von Medium (4) bedeckt ist, im Wesentlichen den gleichen Wert aufweisen.

15. Vorrichtung nach zumindest einem der Ansprüche 12-14,
wobei die Länge (L) und/oder die Steifigkeit der beiden Stangen (10a, 10b) derart gewählt ist, dass die Schwingfrequenz (F1) des ersten Resonators (22) und die Schwingfrequenz (F2) des zweiten Resonators (23) im Falle, dass die schwingfähige Einheit (3) von einem wählbaren Referenzmedium (4) bedeckt ist, im Wesentlichen den gleichen Wert aufweisen.

## Claims

1. Electromechanical transducer unit (6) for a field device (1) used in automation engineering, comprising
- a membrane (9) which can be excited to perform mechanical vibrations,
- two rods (10a, 10b) secured to the membrane (9) by friction locking, such that they are perpendicular to a base area of the membrane (9),
- a housing (8), wherein the membrane (9) forms at least a part of a wall of the housing (8), and wherein the two rods (10a, 10b) project into the interior of the housing,
wherein the two rods (10a, 10b) are secured to the membrane (9) in such a way that vibrations of the membrane (9) result from the vibrations of the two rods (10a, 10b),
**characterized**
**in that** the transducer unit further comprises:
- two magnets (11a, 11b), wherein one magnet (11a, 11b) is fixed, in each case, in the end area of one of the two rods (10a, 10b), said end area facing away from the membrane (9), and
- a coil (12) with a core (13), wherein said coil is secured inside the housing (8) above the magnets (11a, 11b) and wherein said coil (12) can be exposed to an electrical alternating current signal,
wherein the coil (12) is designed to generate a magnetic field, wherein said magnetic field makes the two rods (10a, 10b) produce mechanical vibrations perpendicular to the longitudinal axis of the two rods (10a, 10b) by means of the two magnets (11a, 11b).

2. Electromechanical transducer unit as claimed in Claim 1,
wherein the magnets (11a, 11b) are Alnico magnets.

3. Electromechanical transducer unit as claimed in Claim 1 or 2,
wherein the core (13) of the coil (12) forms part of a pot-shaped anchor unit (14), said anchor unit (14) having a base (15) and a circumferential wall (16) wherein a nozzle (17) is secured starting from the base (15) and pointing centrically into the interior of the anchor unit (14), wherein the nozzle (17) forms the core (13) of the coil (12) and wherein the circumferential wall (16) serves as a unit to return the magnetic field.

4. Electromechanical transducer unit as claimed in Claim 3,
wherein the anchor unit (14) is made from a material with a large magnetic permeability, particularly iron, cobalt or cobalt iron, or a metallic glass.

5. Electromechanical transducer unit as claimed in Claim 3 or 4,
wherein the two magnets (11a, 11b) extend into the pot-shaped anchor unit (14) in a non-contact manner and, in the event that a magnetic field is not available, are located at the same distance to the coil (12) on opposite sides.

6. Apparatus (1) designed to determine and/or monitor at least one process variable of a medium (4) in a container (5), said apparatus comprising
- a sensor unit (2) with at least an electromechanical transducer unit (6) as claimed in at least one of the previous claims, and
- an electronic unit (7),
wherein the electromechanical transducer unit (6) is designed to excite the sensor unit (2) to produce mechanical vibrations using an electrical excitation signal in the form of an electrical alternating current signal which is applied to the coil (12), and to receive the mechanical vibrations of the sensor unit (2) and to convert them into an electrical reception signal in the form of an electrical alternating current signal, and
wherein the electronic unit (7) is designed to generate the excitation signal starting from the reception signal, and to determine the at least one process variable at least on the basis of the reception signal.

7. Apparatus as claimed in Claim 6,
wherein the sensor unit (2) comprises a unit that can vibrate (3).

8. Apparatus as claimed in at least one of the Claims 6 to 8,
wherein the unit that can vibrate (3) comprises at least a part of the membrane (9, 18) or at least a part of the membrane (9, 18) and at least a vibrating rod (20a, 20b) secured to it.

9. Apparatus as claimed in Claim 6,
wherein the membrane (9, 18) has two parts which are interconnected via friction locking, wherein a first part (9) is assigned to the electromagnetic transducer unit (6) and a second part (18) is assigned to the unit that can vibrate (3).

10. Apparatus as claimed in at least one of the Claims 6 to 10,
wherein the unit that can vibrate (3) is arranged in a defined position inside the container (5) in such a way that it is immersed in the medium (4) as far as a determinable immersion depth.

11. Apparatus as claimed in Claim 6 or 7,
wherein the process variable is defined by the level, the density or the viscosity of the medium (4).

12. Apparatus as claimed in at least one of the Claims 6 to 11,
wherein the unit that can vibrate (3) is a tuning fork with two vibrating rods (20a, 20b), and wherein the two rods (10a, 10b) of the electromechanical transducer unit (6) that are secured to the membrane (9, 18) and the two vibrating rods (20a, 20b) that are secured to the membrane (9, 18) are arranged opposite one another in mirror symmetry in relation to a plane perpendicular to the longitudinal axis through the rods (10a, 10b) and/or the vibrating rods (20a, 20b).

13. Apparatus as claimed in Claim 12,
wherein the two vibrating rods (20a, 20b) and the membrane (9, 18) form a first mechanical resonator (22)
wherein the two rods (10a, 10b) of the electromechanical transducer unit (6) and the membrane (9, 18) form a second mechanical resonator (23),
wherein the first resonator (22) and the second resonator (23) are mechanically coupled with one another by means of the membrane (9, 18), and
wherein the frequency of the excitation signal is chosen in such a way that the first resonator (22) and the second resonator (23) vibrate in an antisymmetric vibration mode in relation to a plane through the membrane (9, 18) perpendicular to the longitudinal axis of the rods (10a, 10b) and/or vibrating rods (20a, 20b).

14. Apparatus as claimed in at least one of the Claims 12 or 13,
wherein the length (L) and/or the rigidity of the two rods (10a, 10b) is/are selected in such a way that the vibration frequency (F1) of the first resonator (22) and the vibration frequency (F2) of the second resonator (23) essentially have the same value in the event that the unit that can vibrate (3) is not covered by the medium (4).

15. Apparatus as claimed in at least one of the Claims 12 to 14,
wherein the length (L) and/or the rigidity des two rods (10a, 10b) is/are selected in such a way that the vibration frequency (F1) of the first resonator (22) and the vibration frequency (F2) of the second resonator (23) essentially have the same value in the event that the unit that can vibrate (3) is covered by a selectable reference medium (4).

## Revendications

1. Unité de transducteur électromécanique (6) pour un appareil de terrain (1) de la technique d'automatisation comprenant
- une membrane (9) pouvant être excitée en vibrations mécaniques,
- deux tiges (10a, 10b) fixées par friction sur la membrane (9), perpendiculairement à une surface de base de la membrane (9),
- un boîtier (8), la membrane (9) formant au moins une zone partielle d'une paroi du boîtier (8), et les deux tiges (10a, 10b) s'étendant à l'intérieur du boîtier,
les deux tiges (10a, 10b) étant fixées à la membrane (9) de telle manière que les vibrations de la membrane (9) résultent des vibrations des deux tiges (10a, 10b),
**caractérisée**
**en ce que** l'unité de transducteur comprend en outre :
- deux aimants (11a, 11b), un aimant (11a, 11b) étant respectivement fixé dans la zone d'extrémité éloignée de la membrane (9) de l'une des deux tiges (10a, 10b), et
- une bobine (12) avec noyau (13), laquelle bobine est montée à l'intérieur du boîtier (8) au-dessus des aimants (11a, 11b) et laquelle bobine peut être alimentée avec un signal électrique en courant alternatif,
la bobine (13) étant conçue pour générer un champ magnétique, lequel champ magnétique fait vibrer mécaniquement les deux tiges (10a, 10b) perpendiculairement à l'axe longitudinal des deux tiges (10a, 10b) au moyen des deux aimants (11a, 11b).

2. Unité de transducteur électromécanique selon la revendication 1,
pour lequel les aimants (11a, 11b) sont des aimants Alnico.

3. Unité de transducteur électromécanique selon la revendication 1 ou 2,
pour lequel le noyau (13) de la bobine (12) fait partie d'une unité d'armature (14) en forme de pot, laquelle unité d'armature (14) présente un fond (15) et une paroi périphérique (16) dans laquelle une pièce de raccordement (17) est fixée à partir du fond (15) et est dirigée de façon centrée vers l'intérieur de l'unité d'armature (14), la pièce de raccordement (17) formant le noyau (13) de la bobine (12) et la paroi périphérique (16) faisant office de dispositif de retour du champ magnétique.

4. Unité de transducteur électromécanique selon la revendication 3,
pour lequel l'unité d'armature (14) est constituée d'un matériau ayant une perméabilité magnétique élevée, notamment du fer, du cobalt ou d'un alliage de fer et de cobalt, ou d'un verre métallique.

5. Unité de transducteur électromécanique selon la revendication 3 ou 4,
pour lequel les deux aimants (11a, 11b) s'étendent sans contact dans l'unité d'armature (14) en forme de pot et, dans le cas où aucun champ magnétique n'est présent, sont situés à la même distance de la bobine (12) sur des côtés opposés.

6. Dispositif (1) destiné à la détermination et/ou à la surveillance d'au moins une grandeur de process d'un produit (4) dans un réservoir (5), lequel dispositif comprend
- une unité de capteur (2) avec au moins une unité de transducteur électromécanique (6) selon au moins l'une des revendications précédentes, et
- une unité électronique (7),
dispositif pour lequel l'unité de transducteur électromécanique (6) est conçue pour exciter l'unité de capteur (2) en des vibrations mécaniques au moyen d'un signal d'excitation électrique sous la forme d'un signal de courant alternatif électrique, lequel signal est appliqué à la bobine (12), et pour recevoir les vibrations mécaniques de l'unité de capteur (2) et les convertir en un signal de réception électrique sous la forme d'un signal de courant alternatif électrique, et
dispositif pour lequel l'unité électronique (7) est conçue pour générer le signal d'excitation à partir du signal de réception, ainsi que pour déterminer au moins une grandeur de process au moins sur la base du signal de réception.

7. Dispositif selon la revendication 6,
pour lequel l'unité de capteur (2) comprend une unité apte à vibrer (3).

8. Dispositif selon au moins l'une des revendications 6 à 8,
pour lequel l'unité apte à vibrer (3) comprend au moins une zone partielle de la membrane (9, 18) ou au moins une zone partielle de la membrane (9, 18) ainsi qu'au moins une tige vibrante (20a, 20b) qui y est fixée.

9. Dispositif selon la revendication 6,
pour lequel la membrane (9, 18) présente deux zones partielles qui sont reliées par friction l'une à l'autre, une première zone partielle (9) étant associée à l'unité de transducteur électromagnétique (6) et une deuxième zone partielle (18) étant associée à l'unité apte à vibrer (3).

10. Dispositif selon au moins l'une des revendications 6 à 10,
pour lequel l'unité apte à vibrer (3) est disposée dans une position définie à l'intérieur du réservoir (5) de telle sorte qu'elle est immergée dans le produit (4) à une profondeur d'immersion déterminable.

11. Dispositif selon la revendication 6 ou 7,
pour lequel la grandeur de process est définie par un niveau, par la densité ou la viscosité du produit (4).

12. Dispositif selon au moins l'une des revendications 6 à 11,
pour lequel l'unité apte à vibrer (3) est une fourche vibrante avec deux tiges vibrantes (20a, 20b), et pour lequel les deux tiges (10a, 10b) de l'unité de transducteur électromécanique (6) fixées à la membrane (9, 18) et les deux tiges vibrantes (20a, 20b) fixées à la membrane (9, 18) sont disposées l'une en face de l'autre en symétrie miroir par rapport au plan perpendiculaire à l'axe longitudinal à travers les tiges (10a, 10b) et/ou les tiges vibrantes (20a, 20b).

13. Dispositif selon la revendication 12,
pour lequel les deux tiges vibrantes (20a, 20b) et la membrane (9, 18) forment un premier résonateur mécanique (22)
pour lequel les deux tiges (10a, 10b) de l'unité de transducteur électromécanique (6) et la membrane (9, 18) forment un second résonateur mécanique (23),
pour lequel le premier résonateur (22) et le second résonateur (23) sont couplés mécaniquement l'un à l'autre au moyen de la membrane (9, 18), et
pour lequel la fréquence du signal d'excitation est choisie de telle sorte que le premier résonateur (22) et le second résonateur (23) vibrent dans un mode de vibration antisymétrique par rapport au plan passant par la membrane (9, 18) perpendiculaire à l'axe longitudinal des tiges (10a, 10b) et/ou des tiges vibrantes (20a, 20b).

14. Dispositif selon au moins l'une des revendications 12 ou 13,
pour lequel la longueur (L) et/ou la rigidité des deux tiges (10a, 10b) est choisie de telle sorte que la fréquence de vibration (F1) du premier résonateur (22) et la fréquence de vibration (F2) du second résonateur (23), dans le cas où l'unité apte à vibrer (3) n'est pas recouverte par le produit (4), ont sensiblement la même valeur.

15. Dispositif selon au moins l'une des revendications 12 à 14,
pour lequel la longueur (L) et/ou la rigidité des deux tiges (10a, 10b) est/sont choisie(s) de telle sorte que la fréquence de vibration (F1) du premier résonateur (22) et la fréquence de vibration (F2) du deuxième résonateur (23), dans le cas où l'unité apte à vibrer (3) est recouverte par un produit de référence (4) sélectionnable, ont sensiblement la même valeur.
